# EUROPEAN PATENT APPLICATION

(11) **EP 0 813 169 A2**
(43) Date of publication of application: **17.12.1997**
(21) Application number: 97303897.9
(22) Date of filing: 06.06.1997
(51) Int. Cl.: G06T 15/70

(54) **Building a production line**

(30) Priority: 10.06.1996 GB 9612078
(71) Applicant: Hawtal Whiting Holdings Ltd., Basildon, Essex SS14 3EZ (GB)
(72) Inventor: Fowler, Simon J., Hockley, Essex, SS5 4PU (GB); Sexton, Dean, Essex, SS9 1RH (GB)
(74) Representative: Mackenzie, Andrew Bryan

(57) **Abstract**

A method of modelling a production process comprising creating an object database (2) containing object data associated with a plurality of objects to be animated by defining and storing in a computer system, the dimensions and relative positions of each object to be animated, selecting one ofthe objects, automatically extracting from the database object data associated with the selected object and generating a two-dimensional representation of the selected object which represents the selected object in real space from a selected viewpoint, arranging a plurality of the two-dimensional representations into a sequence and displaying the sequence of two-dimensional representations as an animated sequence. The invention includes apparatus aspects and a method of building a production process.

## Description

The present invention relates to the building of a production line.

As production lines and production processes become more complex, the problem of building a line becomes increasingly difficult. Nowadays it is common not only to design a new product but to design a production line specifically for that product, thus, two complex things must be designed simultaneously often with only limited access to mock-ups and models. In the automotive industry, for example, a production line includes many variables including the arrangement of the factory building in which the line will be sited complete with pillars supporting the roof, questions of power supply, drainage and ventilation and questions of access into and out of the building. In addition to this, allowance must be made for the siting and range of movement of robots and the siting of stations for the location and replenishment of parts to be fitted on the line.

Clearly it is difficult accurately to foresee how these factors will successfully integrate into a working production line until the line is being built. Clearly also, mistakes can be very expensive to rectify. These problems are in addition to the difficulty of foreseeing whether the product itself can be built without fouling problems where parts obstruct one another in such a way that the final product cannot be built or conveniently maintained.

An attempt has been made in the prior art to model the construction of a product from its individual parts. The technique used was to manually extract data from a CAD computer system and generate an approximate animation of the construction of the product. However, since manual extraction of the data is time consuming, only a subset of the data held on the CAD system was able to be used and furthermore there was no possibility of modelling the building in which the construction was to occur and the characteristics of any automated equipment such as robots. Thus, the model was inaccurate and incomplete and the result of this prior art attempt was therefore unsatisfactory.

According to the present invention there is provided a method of modelling a production process comprising creating an object database containing object data associated with a plurality of objects to be animated by defining and storing in a computer system, the dimensions and relative positions of each object to be animated, selecting one of the objects, automatically extracting from the database object data associated with the selected object and generating a two-dimensional representation of the selected object which represents the selected object in real space from a selected viewpoint, arranging a plurality of the two-dimensional representations into a sequence and displaying the sequence oftwo-dimensional representations as an animated sequence.

By automatically extracting data from the database which typically is that of a mainframe CAD computer system, the time consuming process of manual extraction is avoided. This in turn allows an extremely accurate animation sequence to be produced. Furthermore, accurate information about buildings, and the siting and range of movement of equipment such as robots can also be incorporated. This accurate animation is, by accurately modelling the proposed production process, able to highlight any potential problems with the process before significant amounts of money have been comitted to a particular process design.

In addition, by automatically extracting data from the CAD system, the relative positions of the objects in so-called "real space" are maintained i.e. data is recorded which locates each object relative to the other objects.

Frequently, data held on a CAD system is in a wire-frame format. It is practice at least in the automotive industry, not to render an object with a surface until the detail part (i.e. an object) has been approved. Thus the present invention preferably permits rendering of the object in the two-dimensional representation with a surface. The rendering may include shading but typically the rendering is in solid colours since this has been found to be preferred by the engineering community that typically will use the present invention. Similarly, the present invention preferably also includes the removal of any hidden lines from the objects in the two-dimensional representation i.e. the removal of lines which are visible in a wire-frame representation but which in a solid object would be hidden by surfaces in front of the lines.

Typically the method includes displaying a live object in the animation sequence such that activation of the live object by a user causes the display of further information about the object. Typically the activation will be by means of a pointing device such as a computer mouse in conjunction with a click operation. This typically will result in the opening of a small window over the object on a visual display unit which will provide information such as a part number for the object and/or a root directory for the object data associated with that object.

According to a second aspect of the invention, a method of building a production line comprises creating an object database containing object data associated with a plurality of objects to be animated by defining and storing in a computer system, the dimensions and relative positions of each object to be animated, selecting one of the objects, automatically extracting from the database object data associated with the selected object and generating a two-dimensional representation of the selected object which represents the selected object in real space from a selected viewpoint, arranging a plurality of the two-dimensional representations into a sequence, displaying the sequence of two-dimensional representations as an animated sequence and building a production line using the animated sequence as a model.

According to a third aspect there is provided a method of animating a production process comprising selecting an object from an object database, automatically extracting from the database object data associated with the selected object and generating a two-dimensional representation of the selected object which represents the selected object in real space from a selected viewpoint, arranging a plurality of the two-dimensional representations into a sequence and displaying the sequence of two-dimensional representations as an animated sequence.

According to an apparatus aspect of the invention apparatus for animating a production process comprises an object database stored in a computer system , the database containing object data associated with a plurality of objects to be animated, the object data including the dimensions and relative positions of each object to be animated, means for automatically extracting from the database the object data associated with the selected object, means for generating a two-dimensional representation of the selected object which represents the selected object in real space from a selected viewpoint, means for arranging a plurality of the two-dimensional representations into a sequence and means for displaying the sequence of two-dimensional representations as an animated sequence.

According to a second apparatus aspect there is provided apparatus for building a production line comprising an object database stored in a computer system, the database containing object data associated with a plurality of objects to be animated the object data including the dimensions and relative positions of each object to be animated, means for automatically extracting from the database the object data associated with the selected object, means for generating a two-dimensional representation of the selected object which represents the selected object in real space from a selected viewpoint, means for arranging a plurality of the two-dimensional representations into a sequence, means for displaying the sequence of two-dimensional representations as an animated sequence and means for building a production line using the animated sequence as a model.

According to a further apparatus aspect, there is provided apparatus for building a production line comprising an object database stored in a computer system, the database containing object data associated with a plurality of objects to be animated the object data including the dimensions and relative positions of each object to be animated, means for automatically extracting from the database the object data associated with the selected object, means for generating a two-dimensional representation of the selected object which represents the selected object in real space from a selected viewpoint, means for arranging a plurality of the two-dimensional representations into a sequence, means for displaying the sequence of two-dimensional representations as an animated sequence and means for building a production line using the animated sequence as a model.

The invention will now be described by way of example with reference to the drawing which is a block diagram of apparatus constructed in accordance with the invention.

With reference to the drawing, a CAD system 2 executing on a mainframe computer is arranged to export data relating to objects which have been drawn on the CAD system.

The objects may, for example, in an automotive context, be a door frame, a door skin, a window regulator and the associated fixings. The data relating to each of these objects may be exported in any of the common CAD data formats (e.g. CGS, PDGS, CATYA, IGES etc.). The data is exported into three-dimensional rendering and drawing means. In the preferred embodiment this is form Z (which is produced by Autodessys of Ohio). The three-dimensional drawing and rendering means 4 is used to produce three-dimensional rendered images from the input CAD data. The objects input from the CAD system 2 may be arranged automatically in real space and different viewpoints may be selected as desired.

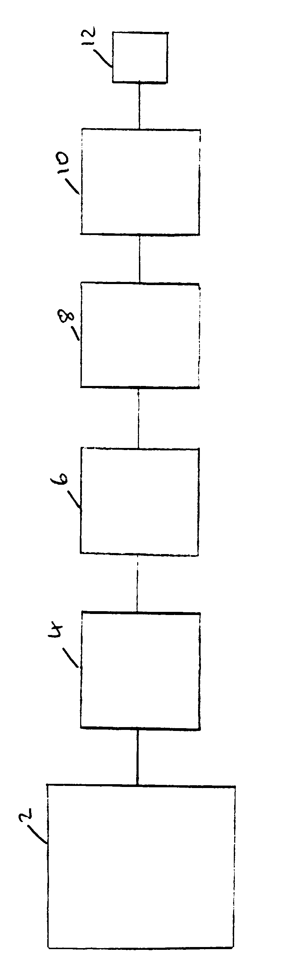

Preferably the rendering and drawing 4 is able to accept data from a source other than the mainframe CAD system 2. For example an animated sequence of views may be imported from apparatus such as a Silicon Graphics workstation. This will typically be imported in the IGES data format.

The object data held on the CAD system will only include surface information for "detail" parts which have been approved. Thus many of the two-dimensional images produced by the drawing and rendering means 4 are in a wireframe format.

The next stage is to export the two-dimensional representations produced by the drawing and rendering means 4 into a two-dimensional drawing means 6. In the preferred embodiment, the means 6 is the application Adobe Illustrator. Thus the preferred export file format from the means 4 to the means 6 is the native Illustrator file format.

In the two-dimensional drawing means 6, hidden lines are removed and solid objects are produced from any wireframe objects produced by the three-dimensional drawing and rendering means 4. At this stage colour is added to the objects.

From the drawing means 6, the representations are exported to a bitmap editor 8. At this stage, any detailed tidying of the representations is performed and any bitmap material is included, e.g. scanned photographs of the real parts which are represented by objects in the two-dimensional representation.

It will be appreciated that in the bitmap editor 8 there now exist a series of presentable two-dimensional images which represent the objects originally held in the CAD system 2 in real space.

The preferred embodiment uses Adobe Photoshop as the bitmap editor. Data is output from the bitmap editor 8 into animation means 10. The preferred file format for this transfer is the PICT file format.

In the preferred embodiment, the animation means is Director produced by Macromedia. The animation means is used to arrange the two-dimensional representations into a selected sequence. At this stage the same representation may be used several times by causing the animation means 10 to move a representation across a visual display unit 12 to which the animation means is connected. Taking the automotive door as an example, one of the two-dimensional representations may be of the assembled door frame and skin and another of the representations may be ofthe window regulator mechanism. During assembly, these two objects stay in the same orientation during assembly. Thus, the only movements required during animation are to move the two parts relative to one another. In this case, although many animation frames will be used to animate the two parts coming together, the animation may only require one two-dimensional representation of each respective component to be produced by the means 4, 6 and 8.

The animation means 10 preferably allows live objects to be included in the resulting animation output. These objects may be GUI interface type buttons or may be the objects themselves. By clicking on one of these buttons or objects using a pointing device such as a mouse, the animation means is caused to display further information about that particular object or about the animation. Typically the further information is a part number and/or a root directory for the original object data on the CAD system 2. In addition, a live object may cause the execution of a video sequence or some other multimedia-type process. Such a equence may be imported into the animation means 10 from a source other than the bitmap editor 8.

In the preferred embodiment, the means, 4, 6, 8 and 10 execute on a PowerMac personal computer as produced by Apple Computer Inc. The visual display unit 12 is therefore the visual display unit of the PowerMac. It will be appreciated that the invention may operate on other platforms (e.g. an IBM compatible type PC or a mini or mainframe computer system).

As a further enhancement, it has been found advantageous to pre-process IGES and DXF files before processing by the three-dimensional drawing and rendering means 4 using an application called CAD Mover produced by Kandu of Virginia, U.S.A.

As yet a further enhancement, data may be incorporated into the three-dimensional drawing and rendering means 4 related to the construction and range of motion of the human body. In this way manual assembly operations in the production process may be assessed, modelled and animated. Typically this data may be used to check that an assembly operation is possible using the normal articulation of, for example, wrists, elbows and fingers. This data is presently marketed as an application called inverse kinematics.

## Claims

1. A method of modelling a production process comprising creating an object database containing object data associated with a plurality of objects to be animated by defining and storing in a computer system, the dimensions and relative positions of each object to be animated, selecting one of the objects, automatically extracting from the database object data associated with the selected object and generating a two-dimensional representation of the selected object which represents the selected object in real space from a selected viewpoint, arranging a plurality of the two-dimensional representations into a sequence and displaying the sequence of two-dimensional representations as an animated sequence.

2. A method according to claim 1 including rendering the object in the two-dimensional representation with a surface.

3. A method according to claim 1 or 2 including removing any hidden lines from the objects in the two-dimensional representation.

4. A method according to any preceding claim including introducing into the sequence an object from a source other than the object data base.

5. A method according to any preceding claim including displaying a live object in the animation sequence such that activation of the live object by a user causes the display of further information about the object.

6. A method according to claim 5 wherein the additional information is a part number for the object and/or a root directory for the object data associated with the object.

7. A method of building a production line comprising creating an object database containing object data associated with a plurality of objects to be animated by defining and storing in a computer system, the dimensions and relative positions of each object to be animated, selecting one of the objects, automatically extracting from the database object data associated with the selected object and generating a two-dimensional representation of the selected object which represents the selected object in real space from a selected viewpoint, arranging a plurality of the two-dimensional representations into a sequence, displaying the sequence of two-dimensional representations as an animated sequence and building a production line using the animated sequence as a model.

8. A method of animating a production process comprising selecting an object from an object database, automatically extracting from the database object data associated with the selected object and generating a two-dimensional representation of the selected object which represents the selected object in real space from a selected viewpoint. arranging a plurality of the two-dimensional representations into a sequence and displaying the sequence of two-dimensional representations as an animated sequence.

9. Apparatus for animating a production process comprising an object database stored in a computer system, the database containing object data associated with a plurality of objects to be animated, the object data including the dimensions and relative positions of each object to be animated, means for automatically extracting from the database the object data associated with the selected object, means for generating a two-dimensional representation of the selected object which represents the selected object in real space from a selected viewpoint, means for arranging a plurality of the two-dimensional representations into a sequence and means for displaying the sequence of two-dimensional representations as an animated sequence.

10. Apparatus for building a production line comprising an object database stored in a computer system, the database containing object data associated with a plurality of objects to be animated the object data including the dimensions and relative positions of each object to be animated, means for automatically extracting from the database the object data associated with the selected object, means for generating a two-dimensional representation of the selected object which represents the selected object in real space from a selected viewpoint. means for arranging a plurality of the two-dimensional representations into a sequence, means for displaying the sequence of two-dimensional representations as an animated sequence and means for building a production line using the animated sequence as a model.

11. A method as herein described with reference to the drawing.

12. Apparatus constructed and arranged as herein described with reference to the drawing.
